# FASCICULE DE BREVET EUROPEEN

(11) **EP 2 333 785 B1**
(45) Date de publication et mention de la délivrance du brevet: **20.06.2012**
(21) Numéro de dépôt: 10192632.7
(22) Date de dépôt: 25.11.2010
(51) Int. Cl.: G21C 15/24, F16M 7/00, F04D 29/62

(54) **Support de moteur d'un groupe motopompe primaire d'un réacteur nucléaire à eau pressurisée**
Aufbaustruktur für den Motor eines Kühlmittelpumpenaggregats in einem Druckwasserreaktor
Motor support structure for a reactor coolant pump set in a pressurized water reactor

(30) Priorité: 08.12.2009 FR 0958743
(43) Date de publication de la demande: 15.06.2011
(73) Titulaire: JSPM, 59460 Jeumont (FR)
(72) Inventeur: Philippart, Olivier, 59300, Valenciennes (FR)
(74) Mandataire: Lebkiri, Alexandre

(56) Documents cités:
- EP-A1- 0 223 677
- DE-A1- 3 236 494
- US-A- 3 788 580
- DATABASE WPI Week 198530 Thomson Scientific, London, GB; AN 1985-181742 XP002601436, -& JP 60 111189 A (TOSHIBA KK) 17 juin 1985 (1985-06-17)

## Description

La présente invention concerne un support moteur d'un groupe motopompe primaire d'un réacteur nucléaire à eau pressurisée.

Le domaine de l'invention est celui des réacteurs à eau pressurisée. L'invention concerne, plus particulièrement un groupe motopompe primaire (GMPP) du circuit primaire d'un réacteur nucléaire à eau pressurisée et plus particulièrement un support moteur d'un tel groupe.

D'une façon connue, les réacteurs à eau pressurisée comportent une cuve réacteur remplie d'eau sous pression dans laquelle est contenu le coeur du réacteur, ainsi qu'un circuit primaire formé de plusieurs boucles en communication avec la cuve réacteur.

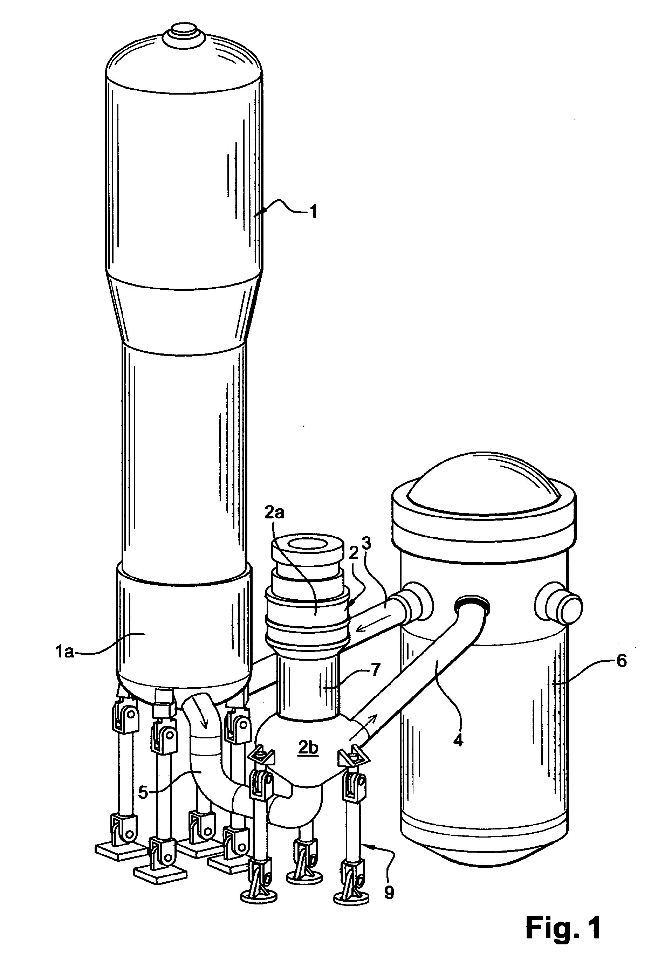

Le circuit primaire d'un réacteur à eau pressurisée comporte, d'une façon classique, 3 ou 4 boucles connectées de façon symétrique à la cuve du réacteur. La figure 1 représente typiquement une boucle du circuit primaire d'un réacteur à eau pressurisée. Chaque boucle du circuit primaire comporte :
- un générateur de vapeur 1 dans lequel l'eau sous pression se refroidit en échauffant et en vaporisant de l'eau secondaire alimentaire ;
- une pompe primaire 2, appelée motopompe primaire ou encore groupe motopompe primaire (GMPP), assurant la circulation de l'eau sous pression dans le circuit primaire.

Le circuit primaire comporte également un pressuriseur (non représenté) relié à l'une des boucles par une ligne d'expansion.

Chaque boucle du circuit primaire est formée par des canalisations primaires comportant :
- une branche chaude 3 reliant la cuve réacteur 6 au générateur de vapeur 1,
- une branche 5 ayant la forme d'un U, appelée branche en U, reliant le générateur de vapeur 1 au groupe motopompe primaire 2,
- une branche froide 4 reliant la motopompe primaire 2 à la cuve réacteur 6.

L'eau de refroidissement du réacteur sous pression est mise en circulation dans chaque boucle par le groupe motopompe primaire 2. L'eau échauffée dans la cuve réacteur 6, au contact du coeur, parvient dans la zone inférieure 1 a du générateur de vapeur 1, formant une boîte à eau, par la branche chaude. L'eau circule ensuite dans les tubes du générateur de vapeur 1 où elle se refroidit en échauffant et en vaporisant l'eau secondaire d'alimentation. L'eau refroidie revient ensuite dans la boîte à eau pour être renvoyée au groupe motopompe primaire 2 par la branche en U 5 puis à la cuve réacteur 6 par la branche froide 4. Le sens de circulation de l'eau sous pression est représenté à titre indicatif par des flèches sur la figure 1.

Le groupe motopompe primaire 2 est une machine à axe vertical comportant dans sa partie supérieure 2a un moteur électrique asynchrone fixé au dessus d'une pompe de type hélico-centrifuge, située dans la partie inférieure 2b du groupe motopompe primaire 2, le moteur électrique et la pompe étant solidarisés au moyen d'un élément appelé support moteur 7.

Le groupe motopompe primaire 2 repose sur des béquilles articulées 9, typiquement au nombre de trois, présentant à chacune de leurs extrémités une rotule. Les béquilles articulées 9 sont disposées de manière à permettre le déplacement du groupe motopompe primaire 2 sous l'effet des dilatations thermiques des canalisations primaires lors du fonctionnement du réacteur.

De façon connue, le groupe motopompe primaire 2 est également maintenu transversalement par des dispositifs de maintien transversal (non représentés).

Les dispositifs de maintien transversal, ainsi que les béquilles articulées, autorisent des déplacements lents du groupe motopompe primaire dans des limites de débattements autorisés, c'est-à-dire typiquement des déplacements lents résultant de la dilatation des canalisations primaires.

En cas de déplacements rapides et consécutifs dus à des situations accidentelles, telles que par exemple un séisme ou encore une rupture de canalisations primaires, les dispositifs de maintien transversal assurent transversalement le maintien du groupe motopompe primaire.

Les dispositifs de maintien transversal sont disposés radialement autour du groupe motopompe primaire selon deux directions concourantes formant généralement un angle proche de 90° et sont reliés à des moyens de fixation du support moteur du groupe motopompe primaire.

Dans les conceptions connues, le support moteur est une pièce de grande dimension en acier réalisée par fonderie.

Les moyens de fixation d'un tel support sont généralement implantés à une hauteur proche du plan de pose de la bride de fixation du support moteur sur laquelle le moteur est solidarisé.

Les moyens de fixation sont formés par une chape en forme d'étrier réalisée lors de la réalisation du support moteur par fonderie et coopèrent avec le dispositif de maintien transversal comportant un bras de liaison. La liaison entre la chape du support moteur et le bras de liaison du dispositif de maintien transversal est assurée par un axe transversal traversant la chape et le bras de façon à former une liaison pivot.

Cependant, la fabrication par fonderie du support moteur intégrant les moyens de fixation en forme de chape pose des problèmes de réalisation en raison des épaisseurs importantes requises au niveau des chapes de fixation.

Dans ce contexte, l'invention vise à résoudre les problèmes mentionnés ci-dessus et à proposer une conception de support moteur permettant de simplifier la réalisation d'un tel support moteur de groupe motopompe primaire.

A cette fin, l'invention propose un support moteur d'un groupe motopompe primaire d'un réacteur nucléaire à eau pressurisée comportant une bride supérieure et des moyens de fixation aptes à assurer la fixation de moyens de maintien transversal dudit groupe motopompe primaire, ledit groupe motopompe primaire comportant un moteur électrique présentant une bride inférieure apte à être solidarisée avec ladite bride supérieure dudit support moteur, ledit support moteur étant caractérisé en ce que lesdits moyens de fixation comportent un élément annulaire en appui sur ladite bride supérieure dudit support moteur apte à être bridé entre ladite bride supérieure dudit support moteur et ladite bride inférieure dudit moteur, lesdits moyens de fixation comprenant au moins une excroissance radiale dans laquelle est ménagé un espace apte à recevoir lesdits moyens de maintien.

Grâce à l'invention, il est possible de proposer une conception simplifiée du support moteur d'un groupe motopompe primaire d'un réacteur nucléaire à eau pressurisée dépourvue de moyens de fixation en forme de chape, d'épaisseurs importantes, permettant ainsi de s'affranchir des contraintes de réalisation de support moteur.

A cet effet, le support moteur selon l'invention comporte un élément annulaire de bridage apte à être intercalé et bridé entre la bride annulaire du support moteur et la bride annulaire du moteur. L'élément annulaire comporte une excroissance radiale dans laquelle est ménagé un espace permettant d'assurer une liaison avec le bras de liaison des moyens de maintien transversal, notamment au moyen d'un axe transversal traversant l'excroissance radiale et le bras de liaison.

L'architecture d'une installation de réacteur à eau pressurisée dicte sensiblement le positionnement des différents groupes motopompe primaire en fonction de la disponibilité au sol pour l'implantation des béquilles articulées ; il est donc fréquent que la localisation angulaire des moyens de fixation soit différente d'un support moteur à un autre pour une même installation, ou pour deux installations différentes. Selon les conceptions connues de support moteur, il est donc nécessaire de développer autant de dispositif de moulage de supports moteur que de situations de localisation des moyens de fixation. Grâce à l'invention, la conception du support moteur est simplifiée et permet de s'affranchir de la réalisation d'une pluralité de dispositif de moulage. En effet, dans la mesure où il existe une certaine symétrie de révolution de l'élément annulaire, il est possible de modifier la position de l'élément annulaire, et par conséquent l'excroissance radiale, en fonction de l'implantation du groupe motopompe primaire et en fonction de l'implantation des béquilles articulées.

Ainsi grâce à l'invention, il est possible de répondre à toutes les situations d'implantation de groupe motopompe primaire avec l'utilisation de pièces standards.

Le support moteur selon l'invention peut également présenter une ou plusieurs des caractéristiques ci-dessous, considérées individuellement ou selon toutes les combinaisons techniquement possibles :
- ladite excroissance radiale est formée par un appendice venant de fabrication avec ledit élément annulaire et dans le plan dudit élément annulaire, lesdits moyens de fixation comportant une plaque supérieure et une plaque inférieure agencées de part et d'autre dudit appendice de façon à former ledit espace apte à recevoir les moyens de maintien transversal ;
- ledit appendice comporte une zone en retrait bordée de part et d'autre par un bossage faisant saillie ;
- ladite plaque supérieure et ladite plaque inférieure sont chacune formées par une cornière comportant deux branches latérales et un alésage central ;
- lesdits moyens de maintien transversal sont solidaires des moyens de fixation par un axe de liaison traversant l'orifice central desdites cornières et lesdits moyens de maintien transversal ;
- lesdites cornières comportent des alésages traversant lesdites branches latérales aptes à recevoir des moyens de vissage ;
- au moins une des deux cornières comporte des moyens pour bloquer en rotation lesdits moyens de vissage ;
- lesdits moyens pour bloquer en rotation lesdits moyens de vissage sont formés par des rainures au niveau de chacune des branches latérales ;
- au moins une des deux cornières vient de fabrication avec ledit élément annulaire ;
- ledit élément annulaire est rendu solidaire de ladite bride support par des moyens de vissage ;
- ledit support moteur comporte une pluralité de goupilles traversant ledit élément annulaire et ladite bride support aptes à bloquer la rotation dudit élément annulaire ;
- ladite bride support comporte un tenon et ledit élément annulaire comporte une mortaise complémentaire, ledit tenon et ladite mortaise complémentaire étant aptes à supporter les efforts radiaux transmis par lesdits moyens de maintien transversal ;

L'invention a également pour objet un groupe motopompe primaire d'un réacteur nucléaire à eau pressurisée caractérisé en ce qu'il comporte des béquilles articulées supportant ledit groupe motopompe primaire et un support moteur selon l'invention, la position desdits moyens de fixation dudit support moteur étant modulable en fonction de l'implantation desdites béquilles articulées.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre une vue en perspective d'une boucle d'un réacteur nucléaire à eau pressurisée ;
- la figure 2 illustre une vue en perspective de la zone de raccord entre un support moteur selon l'invention et un moteur d'un groupe motopompe primaire ;
- la figure 3 illustre une vue éclatée partielle des moyens de fixation du support moteur selon l'invention illustrée à la figure 2 ;
- la figure 4 illustre une vue en perspective et en coupe partielle du support moteur selon l'invention ;
- la figure 5 illustre une vue détaillée en perspective et selon une deuxième coupe partielle du support moteur selon l'invention.

Dans toutes les figures, les éléments communs portent les mêmes numéros de référence sauf précision contraire.
La figure 1 a déjà été décrite précédemment en référence à la présentation générale de l'invention.

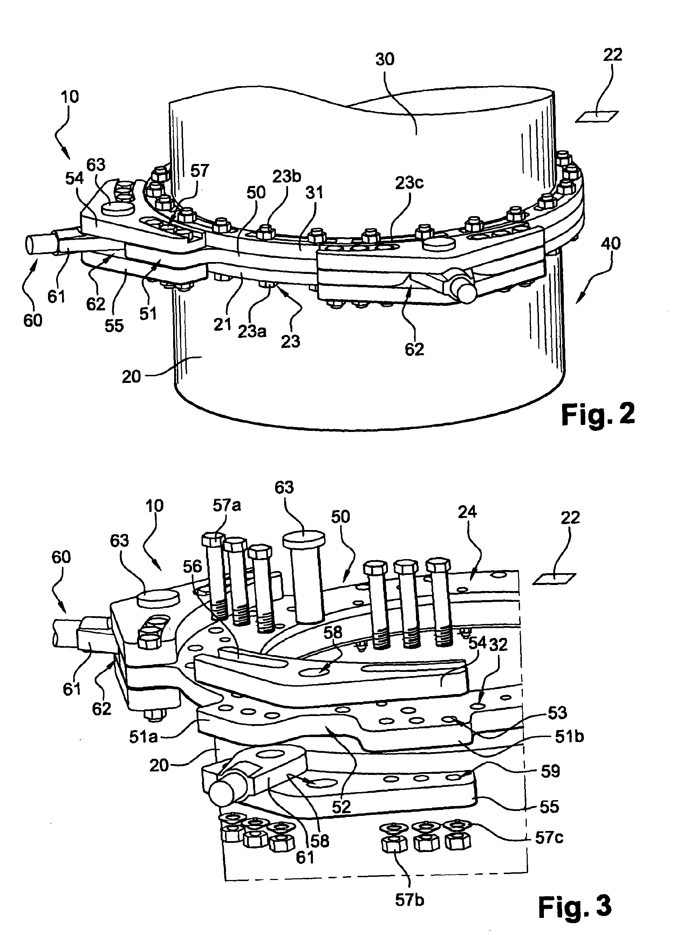

La figure 2 illustre une vue en perspective de la zone de raccord entre un support moteur 20 selon l'invention et un moteur 30 d'un groupe motopompe primaire 40.
La figure 3 illustre une vue éclatée partielle des moyens de fixation 10 du support moteur 20 illustré à la figure 2.

Le support moteur 20 est une pièce sensiblement cylindrique comportant à son extrémité supérieure une bride annulaire 21, appelée par la suite « bride support », sur laquelle est solidarisé sur sa face supérieure un élément annulaire 50, de sorte que le support moteur 20 présente un plan d'appui 24, sensiblement parallèle à un plan horizontal 22, apte à recevoir en appui le moteur 30. Le moteur 30 comporte à cet effet une bride annulaire 31 dans sa partie inférieure, appelée par la suite « bride moteur », présentant également un plan d'appui sensiblement parallèle au plan horizontal 22.

La bride support 21 et la bride moteur 31 comportent une pluralité d'alésages repartis radialement en périphérie des brides 21, 31. L'élément annulaire 50 comporte également une pluralité d'alésages 32, le traversant de part et d'autre, repartis de façon à ce que les alésages 32 soient en regard des alésages de la bride moteur 31 et en regard des alésages de la bride support 21.

Le moteur 30 est positionné sur le support moteur 20 de sorte que les alésages de la bride moteur 31 se positionnent en regard des alésages de la bride support 21 et des alésages de l'élément annulaire 50.

Le moteur 30 et le support moteur 20 sont bridés au moyen d'une pluralité de moyens de vissage 23 formés typiquement par des vis filetées à tête hexagonale 23a et des écrous 23b.

Ainsi, les moyens de vissage 23 traversent les brides 21, 31 et l'élément annulaire 50 au niveau des alésages 32. L'arrêt en rotation de ces moyens de vissage 23 est réalisé par appui d'un pan de la tête hexagonale des vis 23a contre le support moteur 30 et blocage des écrous 23b au moyen de plaquettes frein 23c.

L'élément annulaire 50 comporte au moins un appendice radial 51 dans le plan de l'élément annulaire 50, c'est-à-dire selon le plan d'appui 24. Selon le mode de réalisation représenté aux figures 2 et 3, l'élément annulaire 50 comporte deux appendices radiaux 51 positionnés selon deux directions radiales perpendiculaires concourantes formant un angle proche de 90°. Chaque appendice radial 51 est formé par un premier bossage 51 a, un deuxième bossage 51 b et une zone en retrait 52 positionnée entre les deux bossages 51 a, 51 b formant un vallon entre les deux bossages 51a et 51 b.

Au niveau de chaque bossage 51 a, 51 b, l'appendice 51 comporte une pluralité d'alésages 53 le traversant de part et d'autre.

Les deux bossages 51 a, 51 b sont aptes à recevoir respectivement sur leur face supérieure et sur leur face inférieure une plaque formant une cornière supérieure 54 et une cornière inférieure 55.

Ainsi, en d'autres termes, l'élément annulaire 50 comporte en périphérie au moins une excroissance faisant saillie, l'excroissance étant formée par un appendice radial 51 et par une cornière supérieure 54 et une cornière inférieure 55 agencées de part et d'autre de l'appendice 51 de façon à former un espace 62 apte à recevoir des moyens de maintien transversal 60.

Les cornières 54, 55 comportent deux branches latérales agencées sensiblement en forme de V et présentant un angle d'ouverture non limité à un angle droit.

Les cornières 54, 55 comportent sur chacune des branches latérales des alésages 59 disposés en regard des alésages 53 des bossages 51 a, 51 b.

Les cornières 54, 55 ont une base de forme concave apte à épouser la forme circulaire des brides 31, 21, lorsque les cornières 54, 55 sont assemblées sur les appendices 51.

Sur la face externe d'au moins une des cornières 54, 55, c'est-à-dire sur la face qui n'est pas en contact avec la surface des bossages 51 a, 51 b de l'appendice 51 et au niveau des branches latérales présentant les alésages 59, est ménagée au moins une rainure 56 apte à l'insertion de moyens de vissage 57, et notamment à l'insertion et à l'encastrement des têtes de vis 57a. Selon le mode de réalisation présenté aux figures 2 et 3, seule la cornière supérieure 54 comporte des rainures 56.

Les moyens de vissage 57 sont formés par des vis 57a à tête hexagonale, des plaquettes de freinage 57c et des écrous 57b.

Selon le mode de réalisation présenté aux figures 2 et 3, les cornières supérieures 54 comportent deux rainures 56 situées de part et d'autre d'un alésage 58 centrale débouchant dans un espace 62 délimité par la zone en retrait 52 de l'élément annulaire 50 et bordé par les cornières 54, 55.

La profondeur des rainures 56 correspond sensiblement à la hauteur des têtes de vis 57a et la largeur des rainures 56 est sensiblement égale, ou légèrement supérieure, à la côte sur plat des têtes hexagonales des vis 57a, de sorte que les têtes de vis 57a puissent s'insérer dans la rainure 56 et être maintenues bloquées en rotation par contact d'au moins un pan de la tête de vis contre un flanc de la rainure 56.

Ainsi, l'assemblage de l'ensemble formé par la cornière supérieure 54, l'appendice 51 et la cornière inférieure 55 est solidarisé au moyen de la pluralité de moyens de vissage 57 traversant les différents éléments de cet ensemble.

Le système constitué par les cornières 54, 55 et l'élément annulaire 50 forment ainsi des moyens de fixation 10 aptes à assurer la fixation les moyens de maintien transversal du groupe motopompe primaire.

Selon le mode avantageux illustré, le groupe motopompe primaire comporte deux moyens de fixation 10 aptes à assurer la fixation de deux moyens de maintien transversal. Toutefois, le groupe motopompe primaire peut comporter plus de deux moyens de fixation 10 s'il est nécessaire de maintenir transversalement le groupe motopompe primaire avec plus de deux moyens de maintien transversal. Le groupe motopompe primaire peut donc comporter autant de moyens de fixation 10 que de moyens de maintien transversal du groupe motopompe primaire nécessaire.

On rappelle que le groupe motopompe primaire est maintenu d'une part par des béquilles articulées sur lesquelles il repose, et des moyens de maintien transversal.

Typiquement le groupe motopompe primaire repose sur trois béquilles articulées, présentant à chacune de leurs extrémités une rotule. Les béquilles articulées sont disposées de manière à permettre le déplacement du groupe motopompe primaire sous l'effet des dilatations thermiques des canalisations primaires lors du fonctionnement du réacteur.

Les dispositifs de maintien transversal ainsi que les béquilles articulées autorisent un déplacement du groupe motopompe primaire selon un débattement limite autorisé, c'est-à-dire typiquement les déplacements lents résultant de la dilatation des canalisations primaires.

En cas de déplacements rapides et consécutifs dus à des situations accidentelles, telles que par exemple un séisme ou encore une rupture de canalisations primaires, les dispositifs de maintien transversal assurent le maintien transversal du groupe motopompe primaire.

Une première extrémité du bras de liaison des moyens de maintien transversal est représentée sur les figures 2 et 3 par la référence 60. Le bras de liaison des moyens de maintien transversal comporte à son extrémité une rotule 61 d'épaisseur équivalente, ou légèrement inférieure, à l'épaisseur de l'élément annulaire 50.

La deuxième extrémité du bras de liaison des moyens de maintien transversal (non représentée) est fixée sur les parois verticales de la structure fixe en béton à l'intérieur de laquelle le groupe motopompe primaire est positionné, cette structure étant communément appelée casemate.

La rotule 61 est insérée dans l'espace 62 des moyens de fixation 10 formé par la zone en retrait 52 de l'appendice 51 et bordé par les cornières 54, 55. La rotule 61 est maintenue solidaire du support moteur 20 par un axe 63 traversant les cornières 54, 55 via l'alésage 58 et la rotule 61 ; l'axe 63 assure ainsi une liaison pivot entre le support moteur 20 et les moyens 60 de maintien transversal.

Ainsi, lors de situations accidentelles, telles qu'une rupture des canalisations primaires ou encore lors d'un séisme, les efforts au niveau des fixations des moyens de maintien transversal 60 s'exercent suivant des directions radiales. Ces efforts sollicitent en cisaillement les liaisons formées par les cornières supérieures 54, inférieures 55 et l'élément annulaire 50.

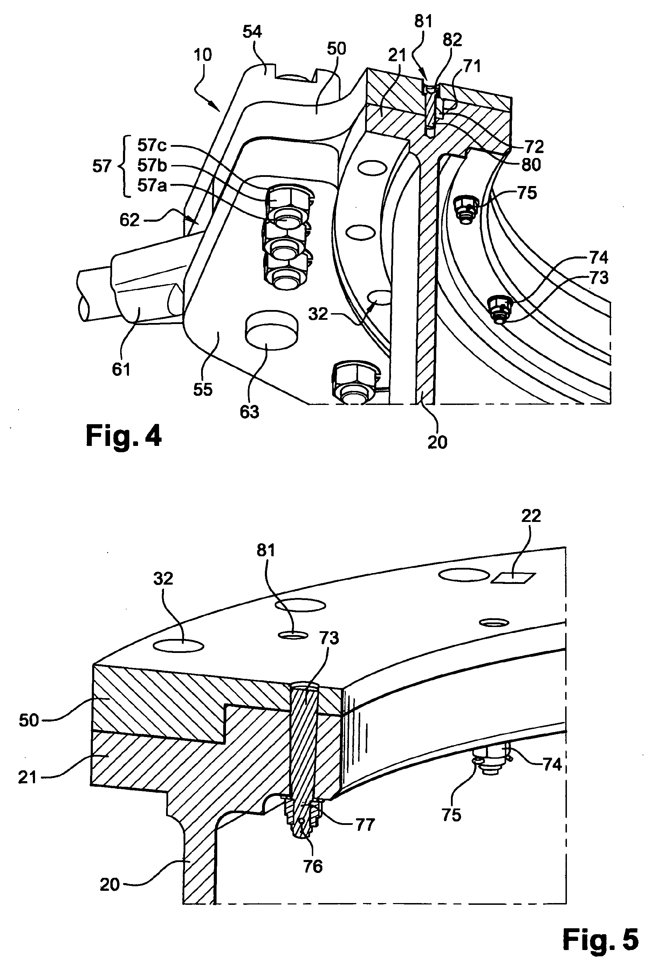

Comme illustré à la figure 4, représentant en perspective et selon une coupe partielle le support moteur 20 selon l'invention, le centrage de l'élément annulaire 50 sur la bride support 21 est assuré par emboîtement. L'emboîtement est réalisé avantageusement en ménageant un tenon cylindrique 71 sur la face d'appui de la bride support 21 et une mortaise correspondante 72 sur la face inférieure de l'élément annulaire 50.

Selon un autre mode de réalisation de l'invention, le centrage de l'élément annulaire 50 sur la bride support 21 peut être obtenu par le ménagement d'une mortaise sur la bride support 21 et sur l'élément annulaire 50 et en utilisant un tenon rapporté dont l'épaisseur permet un emboîtement dans les mortaises de la bride support 21 et de l'élément annulaire 50.

La liaison mortaise/tenon est dimensionnée pour permettre la reprise des efforts exercés par les moyens de maintien transversal 60 en situations accidentelles.

Dans l'hypothèse d'un défaut d'alignement des moyens de maintien transversal 60, les efforts exercés par les moyens de maintien 60 ne sont pas appliqués au support moteur 20 suivant des directions radiales mais selon des directions différentes. Ainsi, leurs résultantes présenteront une composante radiale majoritaire mais également une composante tangentielle.

La composante radiale est reprise par la liaison tenon/mortaise précédemment décrite. La composante tangentielle se traduit au niveau de la liaison tenon/mortaise par un moment autour d'un axe vertical parallèle à l'axe longitudinal du support moteur 20.

Selon le mode de réalisation avantageux illustré à la figure 5, la reprise de ce moment est assurée par l'insertion de goupilles coniques 73 traversant l'élément annulaire 50 et la bride support 21, les goupilles coniques étant réparties circonférentiellement sur la surface d'appui 24.

Selon un deuxième mode de réalisation de l'invention, les goupilles coniques peuvent indifféremment être remplacées par des goupilles cylindriques, des goupilles élastiques ou encore d'autres types de goupilles.

La reprise de ce moment peut également être réalisée par l'utilisation de dentures sur chacune des faces en contact de l'élément annulaire 50 et de la bride support 21, de façon à créer une résistance tangentielle à cet effort.

Selon un troisième mode de réalisation de l'invention, la reprise de l'effort tangentiel peut simplement être réalisée par les moyens de bridage 23 formant un joint boulonné cylindrique et assurant la liaison entre le moteur 30 et le support moteur 20. Dans ce cas, le dimensionnement des moyens de vissage 23 devra prendre en compte la reprise de cet effort tangentiel par adhérence entre les faces de contact de l'élément annulaire 50 et de la bride support 21.

Le blocage des goupilles coniques 73 est réalisé au moyen d'écrous 74, avantageusement du type écrou à créneaux, freinés par l'intermédiaire d'une goupille fendue 75 passant à l'intérieur de l'un des créneaux de l'écrou 74 et au travers d'un orifice 76 préalablement percé dans la partie filetée 77 de la goupille conique 73.

Selon un autre mode de réalisation de l'invention, le freinage de l'écrou 74 peut être réalisé par matage de l'écrou, ou encore par soudure partielle de l'écrou 74 sur la partie filetée 77 de la goupille conique 73.

Afin de faciliter la manutention du support moteur 20, et en particulier pour le montage ou le démontage du moteur 30, l'élément annulaire 50 est avantageusement solidaire de la bride support 21 au moyen d'une pluralité de vis 80 (figure 4). Les vis 80 sont avantageusement des vis à tête cylindrique hexagonale creuse dont les têtes sont positionnées dans des lamages 81 ménagés dans l'élément annulaire 50, de sorte que les vis 80 n'interfèrent pas avec la bride moteur 31 lors du montage du moteur 30. Le freinage de ces vis 80 de fixation est avantageusement réalisé par des rondelles frein 82 positionnées sous la tête des vis 80, de type Nord-lock^{™}. Toutefois, il est également envisageable d'utiliser des vis à tête cylindrique hexagonale creuse comportant des rainures de freinage associées à des coupelles frein.

Selon un mode avantageux de l'invention, le support moteur selon l'invention est réalisé par fonderie, toutefois, il peut également être réalisé à partir d'un assemblage mécano-soudé.

Grâce à l'invention, la conception d'un support moteur est simplifiée et permet de s'affranchir de la réalisation d'une pluralité de dispositif de moulage. En effet, dans la mesure où il existe une certaine symétrie de révolution de l'élément annulaire, il est possible de modifier facilement la position de l'élément annulaire, et par conséquent de l'excroissance radiale, en fonction de l'implantation du groupe motopompe primaire et en fonction de l'implantation des béquilles articulées. Ainsi, il est possible de répondre à toutes les situations d'implantation de groupe motopompe primaire avec l'utilisation de trois pièces standards : l'élément annulaire, la cornière supérieure et la cornière inférieure.

## Revendications

1. Support moteur (20) d'un groupe motopompe primaire d'un réacteur nucléaire à eau pressurisée comportant :
- une bride supérieure (21),
- des moyens de fixation (10) aptes à assurer la fixation de moyens de maintien transversal (60) dudit groupe motopompe primaire, ledit groupe motopompe primaire comportant un moteur électrique 30 présentant une bride inférieure (31) apte à être solidarisée avec ladite bride supérieure (21) dudit support moteur (20),
ledit support moteur (20) étant **caractérisé en ce que** lesdits moyens de fixation (10) comportent un élément annulaire (50) en appui sur ladite bride supérieure (21) dudit support moteur (20) apte à être bridé entre ladite bride supérieure (21) dudit support moteur (20) et ladite bride inférieure (31) dudit moteur (30), lesdits moyens de fixation (10) comprenant au moins une excroissance radiale dans laquelle est ménagé un espace (62) apte à recevoir lesdits moyens de maintien (60).

2. Support moteur (20) d'un groupe motopompe primaire d'un réacteur nucléaire à eau pressurisée selon la revendication 1 **caractérisé en ce que** ladite excroissance radiale est formée par un appendice (51) venant de fabrication avec ledit élément annulaire (50) et dans le plan dudit élément annulaire (50), lesdits moyens de fixation (10) comportant une plaque supérieure (54) et une plaque inférieure (55) agencées de part et d'autre dudit appendice (51) de façon à former ledit espace (62) apte à recevoir les moyens de maintien transversal (60).

3. Support moteur (20) d'un groupe motopompe primaire d'un réacteur nucléaire à eau pressurisée selon la revendication 2 **caractérisé en ce que** ledit appendice (51) comporte une zone en retrait (52) bordée de part et d'autre par un bossage (51 a, 51 b) faisant saillie.

4. Support moteur (20) d'un groupe motopompe primaire d'un réacteur nucléaire à eau pressurisée selon l'une des revendications 2 à 3 **caractérisé en ce que** ladite plaque supérieure (54) et ladite plaque inférieure (55) sont chacune formés par une cornière comportant deux branches latérales et un alésage central (58).

5. Support moteur (20) d'un groupe motopompe primaire d'un réacteur nucléaire à eau pressurisée selon la revendication 4 **caractérisé en ce que** lesdits moyens de maintien transversal (60) sont solidaires des moyens de fixation (10) par un axe de liaison (63) traversant l'orifice central (58) desdites cornières (54, 55) et lesdits moyens de maintien transversal (60).

6. Support moteur (20) d'un groupe motopompe primaire d'un réacteur nucléaire à eau pressurisée selon l'une des revendications 4 à 5 **caractérisé en ce que** lesdites cornières (54, 55) comportent des alésages traversant lesdites branches latérales aptes à recevoir des moyens de vissage (57).

7. Support moteur (20) d'un groupe motopompe primaire d'un réacteur nucléaire à eau pressurisée selon la revendication 6 **caractérisé en ce qu'**au moins une des deux cornières (54, 55) comporte des moyens (56) pour bloquer en rotation lesdits moyens de vissage (57).

8. Support moteur (20) d'un groupe motopompe primaire d'un réacteur nucléaire à eau pressurisée selon la revendication 7 **caractérisé en ce que** lesdits moyens (56) pour bloquer en rotation lesdits moyens de vissage (57) sont formés par des rainures (56) au niveau de chacune des branches latérales.

9. Support moteur (20) d'un groupe motopompe primaire d'un réacteur nucléaire à eau pressurisée selon la revendication 6 à 8 **caractérisé en ce qu'**au moins une des deux cornières (54, 55) vient de fabrication avec ledit élément annulaire (50).

10. Support moteur (20) d'un groupe motopompe primaire d'un réacteur nucléaire à eau pressurisée selon l'une des revendications 1 à 9 **caractérisé en ce que** ledit élément annulaire (50) est rendu solidaire de ladite bride support (21) par des moyens de vissage (80).

11. Support moteur (20) d'un groupe motopompe primaire d'un réacteur nucléaire à eau pressurisée selon l'une des revendications 1 à 10 **caractérisé en ce qu'**il comporte une pluralité de goupilles (73) traversant ledit élément annulaire (50) et ladite bride support (21) aptes à bloquer la rotation dudit élément annulaire (50).

12. Support moteur (20) d'un groupe motopompe primaire d'un réacteur nucléaire à eau pressurisée selon l'une des revendications 1 à 11 **caractérisé en ce que** ladite bride support (21) comporte un tenon (71) et ledit élément annulaire (50) comporte une mortaise (72) complémentaire, ledit tenon et ladite mortaise complémentaire étant aptes à supporter les efforts radiaux transmis par lesdits moyens de maintien transversal.

13. Groupe motopompe primaire d'un réacteur nucléaire à eau pressurisée **caractérisé en ce qu'**il comporte des béquilles articulées supportant ledit groupe motopompe primaire et un support moteur (20) selon l'une des revendications 1 à 12 ; la position desdits moyens de fixation (10) dudit support moteur (20) étant modulable en fonction de l'implantation desdites béquilles articulées.

## Claims

1. A motor stand (20) of a primary motor-driven pump unit of a pressurized water nuclear reactor comprising:
- an upper flange (21).
- fixing means (10) suited to ensure the fixing of transverse holding means (60) of the said primary motor-driven pump unit, the said primary motor-driven pump unit comprising an electric motor (30) having a lower flange (31) suited to be integrated with the said upper flange (21) of the said motor stand (20),
the said motor stand (20) being **characterized in that** the said fixing means (10) comprise an annular element (50) resting on the said upper flange (21) of the said motor stand (20) suited to be flanged between the said upper flange (21) of the said motor stand (20) and the said lower flange (31) of the said motor (30), the said fixing means (10) including at least one radial excrescence in which there is arranged a space (62) suited to receive the said holding means (60).

2. The motor stand (20) of a primary motor-driven pump unit of a pressurized water nuclear reactor according to Claim 1, **characterized in that** the said radial excrescence is formed by an appendage (51) being manufactured with the said annular element (50) and in the plane of the said annular element (50), the said fixing means (10) comprising an upper plate (54) and a lower plate (55) arranged on either side of the said appendage (51) so as to form the said space (62) suited to receive the transverse holding means (60).

3. The motor stand (20) of a primary motor-driven pump unit of a pressurized water nuclear reactor according to Claim 2, **characterized in that** the said appendage (51) comprises a recessed zone (52) bordered on either side by a projecting boss (51a, 51b).

4. The motor stand (20) of a primary motor-driven pump unit of a pressurized water nuclear reactor according to one of Claims 2 to 3, **characterized in that** the said upper plate (54) and the said lower plate (55) are each formed by an angle comprising two lateral branches and a central bore (58).

5. The motor stand (20) of a primary motor-driven pump unit of a pressurized water nuclear reactor according to Claim 4, **characterized in that** the said transverse holding means (60) are integral with the fixing means (10) by a connecting axis (63) passing through the central orifice (58) of the said angles (54, 55) and the said transverse holding means (60).

6. The motor stand (20) of a primary motor-driven pump unit of a pressurized water nuclear reactor according to one of Claims 4 to 5, **characterized in that** the said angles (54, 55) comprise bores passing through the said lateral branches suited to receive screwing means (57).

7. The motor stand (20) of a primary motor-driven pump unit of a pressurized water nuclear reactor according to Claim 6, **characterized in that** at least one of the two angles (54, 55) comprises means (56) for blocking in rotation the said screwing means (57).

8. The motor stand (20) of a primary motor-driven pump unit of a pressurized water nuclear reactor according to Claim 7, **characterized in that** the said means (56) for blocking in rotation the said screwing means (57) are formed by grooves (56) at the level of each of the lateral branches.

9. The motor stand (20) of a primary motor-driven pump unit of a pressurized water nuclear reactor according to Claim 6 to 8, **characterized in that** at least one of the two angles (54, 55) is manufactured with the said annular element (50).

10. The motor stand (20) of a primary motor-driven pump unit of a pressurized water nuclear reactor according to one of Claims 1 to 9, **characterized in that** the said annular element (50) is rendered integral with the said support flange (21) by screwing means (80).

11. The motor stand (20) of a primary motor-driven pump unit of a pressurized water nuclear reactor according to one of Claims 1 to 10, **characterized in that** it comprises a plurality of pins (73) passing through the said annular element (50) and the said support flange (21) suited to block the rotation of the said annular element (50).

12. The motor stand (20) of a primary motor-driven pump unit of a pressurized water nuclear reactor according to one of Claims 1 to 11, **characterized in that** the said support flange (21) comprises a tenon (71) and the said annular element (50) comprises a complementary mortise (72), the said tenon and the said complementary mortise being suited to withstand the radial stresses transmitted by the said transverse holding means.

13. A primary motor-driven pump unit of a pressurized water nuclear reactor, **characterized in that** it comprises articulated supports supporting the said primary motor-driven pump unit and a motor stand (20) according to one of Claims 1 to 12; the position of the said fixing means (10) of the said motor stand (20) being able to be modified as a function of the location of the said articulated supports.

## Patentansprüche

1. Motorträger (20) eines Primärpumpenaggregats eines Druckwasser-Kernreaktors, Folgendes aufweisend:
- einen oberen Flansch (21),
- Befestigungsmittel (10), die die Befestigung von Querhaltemitteln (60) des Primärpumpenaggregat sicherstellen können, wobei das Primärpumpenaggregat einen Elektromotor (30) aufweist, der einen unteren Flansch (31) aufweist, der fest mit dem oberen Flansch (21) des Motorträgers (20) verbunden werden kann,
wobei der Motorträger (20) **dadurch gekennzeichnet ist, dass** die Befestigungsmittel (10) ein ringförmiges Element (50) in Auflage auf dem oberen Flansch (21) des Motorträgers (20) aufweisen, der zwischen dem oberen Flansch (21) des Motorträgers (20) und dem unteren Flansch (31) des Motors (30) verflanscht werden kann, wobei die Befestigungsmittel (10) mindestens eine radiale Ausstülpung aufweisen, in der ein Raum (62) eingerichtet ist, der die Haltemittel (60) aufnehmen kann.

2. Motorträger (20) eines Primärpumpenaggregats eines Druckwasser-Kernreaktors nach Anspruch 1, **dadurch gekennzeichnet, dass** die radiale Ausstülpung von einem Ansatz (51) gebildet ist, der gleichzeitig mit dem ringförmigen Element (50) und in der Ebene des ringförmigen Elements (50) hergestellt wird, wobei die Befestigungsmittel (10) eine obere Platte (54) und eine untere Platte (55) aufweisen, die zu beiden Seiten des Ansatzes (51) derart eingerichtet sind, dass sie den Raum (62), der die Querhaltemittel (60) aufnehmen kann, bilden können.

3. Motorträger (20) eines Primärpumpenaggregats eines Druckwasser-Kernreaktors nach Anspruch 2, **dadurch gekennzeichnet, dass** der Ansatz (51) eine Vertiefungszone (52) aufweist, die an beiden Seiten von einem Höcker (51a, 51b), der vorsteht, umrandet ist.

4. Motorträger (20) eines Primärpumpenaggregats eines Druckwasser-Kernreaktors nach einem der Ansprüche 2 bis 3, **dadurch gekennzeichnet, dass** die obere Platte (54) und die untere Platte (55) jeweils aus einem Winkel gebildet sind, der zwei seitliche Schenkel und eine zentrale Bohrung (58) aufweist.

5. Motorträger (20) eines Primärpumpenaggregats eines Druckwasser-Kernreaktors nach Anspruch 4, **dadurch gekennzeichnet, dass** die Querhaltemittel (60) mit den Befestigungsmitteln (10) durch eine Verbindungsachse (63), die die zentrale Öffnung (58) der Winkel (54, 55) und die Querhaltemittel (60) durchquert, fest verbunden sind.

6. Motorträger (20) eines Primärpumpenaggregats eines Druckwasser-Kernreaktors nach einem der Ansprüche 4 bis 5, **dadurch gekennzeichnet, dass** die Winkel (54, 55) Bohrungen aufweisen, die die seitlichen Schenkel durchqueren, die Schraubmittel (57) aufnehmen können.

7. Motorträger (20) eines Primärpumpenaggregats eines Druckwasser-Kernreaktors nach Anspruch 6, **dadurch gekennzeichnet, dass** mindestens einer der zwei Winkel (54, 55) Mittel (56) zum Blockieren in Drehung der Schraubmittel (7) aufweist.

8. Motorträger (20) eines Primärpumpenaggregats eines Druckwasser-Kernreaktors nach Anspruch 7, **dadurch gekennzeichnet, dass** die Mittel (50) zum Blockieren in Drehung der Schraubmittel (57) aus Rillen (56) auf dem Niveau jedes der seitlichen Schenkel gebildet sind.

9. Motorträger (20) eines Primärpumpenaggregats eines Druckwasser-Kernreaktors nach den Ansprüchen 6 bis 8, **dadurch gekennzeichnet, dass** mindestens einer der Winkel (54,55) aus einem Stück mit dem ringförmigen Element (50) hergestellt ist.

10. Motorträger (20) eines Primärpumpenaggregats eines Druckwasser-Kernreaktors nach einem der Ansprüche 1 bis 9, **dadurch gekennzeichnet, dass** das ringförmige Element (50) mit dem Trägerflansch (21) durch Schraubmittel (80) fest verbunden ist.

11. Motorträger (20) eines Primärpumpenaggregats eines Druckwasser-Kernreaktors nach einem der Ansprüche 1 bis 10, **dadurch gekennzeichnet, dass** er mehrere Stifte (73) aufweist, die das ringförmige Element (50) und den Trägerflansch (21) durchqueren, die die Drehung des ringförmigen Elements (50) blockieren können.

12. Motorträger (20) eines Primärpumpenaggregats eines Druckwasser-Kernreaktors nach einem der Ansprüche 1 bis 11, **dadurch gekennzeichnet, dass** der Trägerflansch (21) einen Zapfen (71) aufweist, und dass das ringförmige Element (50) ein komplementäres Zapfenloch (72) aufweist, wobei der Zapfen und das komplementäre Zapfenloch den radialen Kräften, die von den Querhaltemitteln übertragen werden, standhalten können.

13. Primärpumpenaggregat eines Druckwasser-Kernreaktors, **dadurch gekennzeichnet, dass** es angelenkte Ständer aufweist, die das Primärpumpenaggregat tragen, und einen Motorträger (20) nach einem der Ansprüche 1 bis 12, wobei die Position der Befestigungsmittel (10) des Motorträgers (20) in Abhängigkeit von der Lage der angelenkten Ständer modulierbar ist.
